# EUROPEAN PATENT SPECIFICATION

(11) **EP 2 458 938 B1**
(45) Date of publication and mention of the grant of the patent: **06.06.2018**
(21) Application number: 11190351.4
(22) Date of filing: 23.11.2011
(51) Int. Cl.: H05B 33/08

(54) **LED lighting circuit**
LED-Beleuchtungsschaltung
Circuit d'éclairage à DEL

(30) Priority: 24.11.2010 JP 2010260886
(43) Date of publication of application: 30.05.2012
(73) Proprietor: Panasonic Electric Works Co., Ltd., Kadoma-shi Osaka 571-8686 (JP)
(72) Inventor: Maehara, Minoru, Matsubara, Osaka (JP)
(74) Representative: Rüger, Barthelt & Abel

(56) References cited:
- DE-A1- 10 013 207
- US-A1- 2009 146 575
- US-A1- 2009 322 234
- US-A1- 2010 066 258

## Description

### [Field of the Invention]

The present invention relates to an LED lighting circuit.

### [Background Art]

There are devices which have been conventionally used for lighting LED light sources by supplying an AC voltage to a group of LEDs whose LED light sources are connected in reverse parallel to each other (e.g. refer to JP 2001-351789A, JP 2002-15606A and JP 2005-513819T). Lighting of LED light sources connected in reverse parallel to each other is realized by causing an LED current to flow in either one of the LED light sources in accordance with a polarity of an AC voltage.

There are also devices in which an AC voltage is supplied to a group of LEDs whose LED light sources, which exhibit mutually different light emitting colors, are connected in reverse parallel to each other, and light irradiated from the LED light sources connected in reverse parallel is combined to irradiate from the group of LEDs (e.g. refer to JP 2002-16290A and JP 2005-243396A).

There are further devices in which a dimming control and a color control are applied to light irradiated from a group of LEDs by independently controlling power supplied to each of LED light sources connected in reverse parallel (e.g. refer to JP 2007-194071A and JP 2007-511903T).

DE 100 13 207 A1 and US 2009/0146575 A1 disclose an LED lighting circuit according to the preamble of claim 1.
US 2010/0066258 A1 discloses an LED light emitting circuit to which LED light sources are connected inverse parallel. Two direct current power supplies are provided and connected over a respective switching device with the LED light sources. Dependent from which of the switching devices is in its conductive state, a current flows either through one or through the other LED light source. By adjusting the ratio of the on times of the switching devices, the brightness of each light source can be adjusted.
An LED driver disclosed in US 2009/0322234 A1 allows a fast control of the LED brightness. Two LED series connections are provided and connected in parallel to each other to the output of a DC-DC power converter. A switching element is connected in series to each of the LED series connections. By means of this switching element, the current flowing through a respective LED series connection can be adjusted. The currents through the LED series connections are measured and used to adjust the voltage at the output of the DC-DC converter.

### [Disclosure of the Invention]

### [Problems to be solved by the Invention]

The above mentioned JP 2007-194071A and JP 2007-511903T are, however, accompanied by complex configurations because LED light sources connected in reverse parallel with each other are controlled individually according to respectively connected directions by independently carrying out, in every half cycle of an AC voltage, controls such as phase control for each LED current supplied to each of the LED light sources.

The present invention was achieved by taking the above problems into consideration and an object thereof is to provide an LED lighting circuit which is capable of, with a simple configuration, supplying different power to each of LED light sources connected in reverse parallel to each other.

### [Means adapted to solve the Problems]

An LED lighting circuit according to the present invention includes an apparatus according to claim 1. Preferred embodiments are defined in the dependent claims.

In this LED lighting circuit, it is preferable that the first LED light source and the second LED light source exhibit mutually different light emitting colors.

In this LED lighting circuit, it is preferable that the DC voltage output part is configured to output the DC voltage variably and provided with a DC control part which makes the DC voltage larger as the degree of a dimming control applied to the first and second LED light sources becomes higher.

In this LED lighting circuit, it is preferable that the DC control part makes the DC voltage larger as the difference of time between the first on-time and the second on-time becomes larger.

In this LED lighting circuit, it is preferable that the AC control part establishes an off-time to turn off both the first and second switching elements by stopping a switching control applied to the first and second switching elements, and makes the off-time longer as the degree of a dimming control applied to the first and second LED light sources becomes lower.

In this LED lighting circuit, it is preferable that the AC control part controls, in accordance with the degree of a dimming control applied to the first and second LED light sources, a switching frequency set for the first and second switching elements.

### [Effect of the Invention]

As explained above, the present invention exhibits such an effect that, with a simple configuration, different power can be supplied to each of LED light sources connected in reverse parallel to each other.

### [Brief Description of the Drawings]

[Fig. 1] Fig.1 is a circuit diagram showing an LED lighting circuit according to the present invention.
[Fig. 2] Fig. 2(a) and Fig. 2(b) are waveform diagrams showing control signals in the above LED lighting circuit.
[Fig. 3] Fig. 3 is a circuit diagram showing an LED group in the above LED lighting circuit.
[Fig. 4] Fig. 4(a) and Fig. 4(b) are waveform diagrams showing control signals in the above LED lighting circuit.
[Fig. 5] Fig. 5 (a) and Fig. 5 (b) are waveform diagrams showing control signals in the above LED lighting circuit.
[Fig. 6] Fig. 6 is a graph showing a relationship between the on-duty and the degree of a dimming control in the above LED lighting circuit.
[Fig. 7] Fig. 7 (a) is a waveform diagram showing a DC voltage in the above LED lighting circuit, and Fig. 7 (b) is a waveform diagram showing an on-duty in the above LED lighting circuit.
[Fig. 8] Fig. 8 (a) is a waveform diagram showing a DC voltage in the above LED lighting circuit, and Fig. 8 (b) is a waveform diagram showing an on-duty in the above LED lighting circuit.
[Fig. 9] Fig. 9 (a) is a graph showing characteristics of the color temperature to the degree of a dimming control in an incandescent lamp, Fig. 9 (b) is a graph showing characteristics of the color temperatures to the DC voltage in an LED lighting circuit according to a second embodiment, and Fig.9 (c) is a graph showing characteristics of the color temperature to the on-duty in the above LED lighting circuit.
[Fig. 10] Fig. 10 (a) is a graph showing characteristics of the color temperature to the DC voltage in the above LED lighting circuit, Fig. 10 (b) is a graph showing characteristics of the color temperature to the on-duty in the above LED lighting circuit, and Fig. 10 (c) is a graph showing characteristics of the color temperature to the degree of a dimming control in an LED group provided in the above LED lighting circuit.
[Fig. 11] Fig. 11 is a waveform diagram showing a control signal in an LED lighting circuit according to a third embodiment.
[Fig. 12] Fig. 12 is a waveform diagram showing a switching frequency in an LED lighting circuit according to a fourth embodiment.
[Fig. 13] Fig. 13 is a graph showing characteristics of the on-duty to the DC voltage in an LED lighting circuit according to a fifth embodiment.

### [Best Mode for Carrying Out the Invention]

Embodiments of the present invention will be explained below based on drawings.

### (First embodiment)

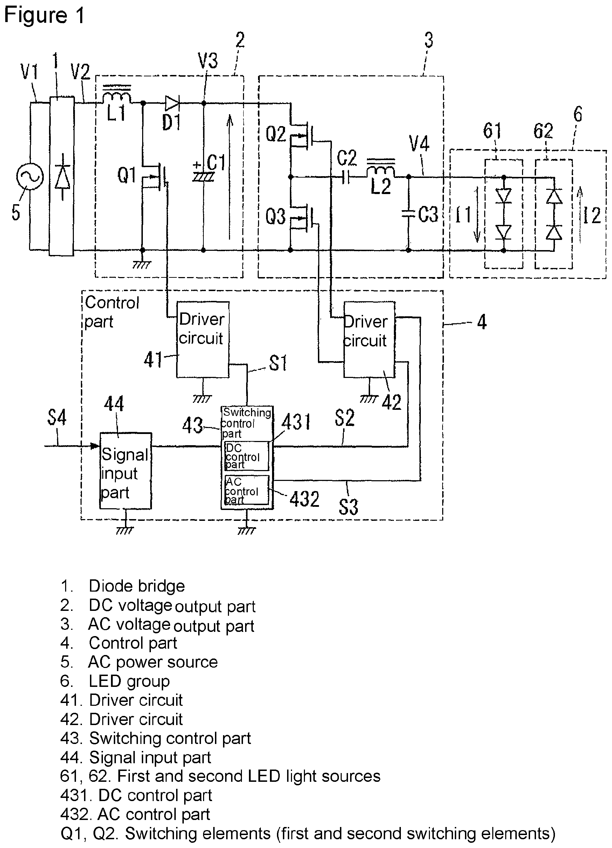

Fig.1 shows a circuit configuration diagram of an LED lighting circuit according to the present invention.

The LED lighting circuit according to the present embodiment includes a diode bridge 1, a DC voltage output part 2, an AC voltage output part 3, and a control part 4.

The diode bridge 1 generates a rectified voltage V2 by applying full-wave rectification to an AC voltage V1 supplied from an AC power source 5 to output to the DC voltage output part 2.

The DC voltage output part 2 includes a step-up chopper circuit which includes an inductor L1, a switching element Q1 made of N-channel MOSFET, a diode D1 and an electrolytic capacitor C1, in a state of being connected to an output of the diode bridge 1.

Between output ends of the diode bridge 1, a series circuit made of the inductor L1 and the switching element Q1 is connected and, in parallel with the switching element Q1, a series circuit made of the diode D1 and the electrolytic capacitor C1 is connected. Also, a drain of the switching element Q1 is connected to a connection point between the inductor L1 and the diode D1, a source thereof is connected to a negative electrode of the electrolytic capacitor C1 and the ground, and a gate thereof is connected to the control part 4.

The control part 4 includes a driver circuit 41 for turning on/off the switching element Q1, and a switching control part 43 having a DC control part 431 which controls the driver circuit 41 to operate. The DC control part 431 outputs, to the deriver circuit 41, a control signal S1 which repeats a high level and a low level alternately, and the driver circuit 41 turns on/off the switching element Q1 in synchronization with the control signal S1. Then, by repetition of turning on/off the switching Q1, the rectified voltage V2 is boosted to generate a DC voltage V3 between both ends of the electrolytic capacitor C1. The DC control part 431, which performs a feedback control by detecting the DC voltage V3, is also capable of controlling the DC voltage V3 to a desired value.

The AC voltage output part 3 includes a half-bridge inverter circuit which includes switching elements Q2 and Q3 made of an N-channel MOSFET, a capacitor C2, an inductor L2 and a capacitor C3, in a state of being connected to an output of the DC voltage output part 2.

In parallel with the electrolytic capacitor C1, a series circuit made of the switching elements Q2 and Q3 (or first and second switching elements) is connected, wherein the switching element Q2 is connected to a high voltage side and the switching element Q3 is connected to a low voltage side. Also, in parallel with the switching element Q3, a series circuit made of the capacitor C2, the inductor L2 and the capacitor C3 is connected. One end of the capacitor C2 is connected a connection point between a source of the switching element Q2 and a drain of the switching element Q3, and the other end of the capacitor C2 is connected to the capacitor C3 via the inductor L2. Gate of each of the switching elements Q2 and Q3 is connected to the control part 4.

The control part 4 includes a driver circuit 42 for turning on/off the switching elements Q2 and Q3, and the switching control part 43 having an AC control part 432 for controlling the driver circuit 42 to operate. The AC control part 432 outputs, to the driver circuit 42, control signals S2 and S3 which repeat a high level and a low level alternately. Then, in synchronization with the control signals S2 and S3, the driver circuit 42 turns on the switching elements Q2 and Q3 when the output level of the control signals Q2 and Q3 corresponds to a high level, and turns off the switching elements Q2 and Q3 when the output level of the control signals Q2 and Q3 corresponds to a low level.

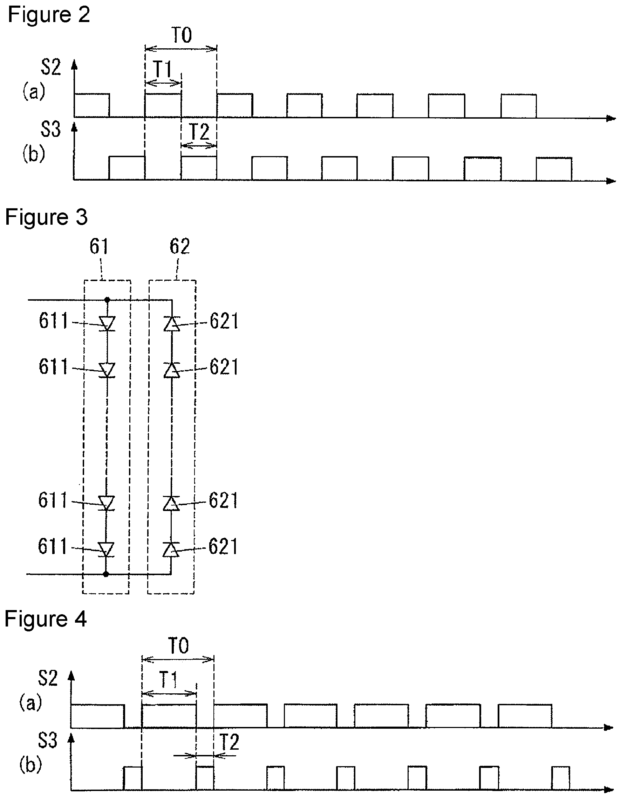

The AC control part 432 which detects a current flowing in the inductor L2 also brings, if a detected value falls in a predetermined upper-limit threshold or more, an output level of the control signal S2 into a low level and an output level of the control signal S3 into a high level. Also, if a detected value falls in a predetermined lower-limit threshold or less, the output level of the control signal S2 is brought into a high level and the output level of the control signal S3 is brought into a low level. Accordingly, as shown in Figs.2a and 2b, the output level of the control signal S3 is a low level when the output level of the control signal S2 is a high level, and the output level of the control signal S3 is a low level when the output level of the control signal S3 is a high level. That is, the AC control part 432 performs a switching control (or complementary switching control) to turn off the switching element Q3 when the switching element Q2 is turned on and turn off the switching element Q2 when the switching element Q3 is turned on.

Then, by repetition of turning on/off the switching elements Q1 and Q2 alternately, the DC voltage V3 is converted to generate an AC voltage V4 between output ends of the capacitor C3.

Also connected to an output of the AC voltage output part 3 is an LED group 6 including first and second LED light sources 61 and 62. As shown in Fig.3, the first LED light source 61 includes a plurality of LED elements 611 connected in series, and the second LED light source 62 includes a plurality of LED elements 621 connected in series. The first and second LED light sources 61 and 62 are connected in reverse parallel to each other. The first LED light source 61 is connected to a connection point between the inductor L2 and the capacitor C3 on an anode side thereof, and connected to a connection point between the switching element Q3 and the capacitor C3 on a cathode side thereof. The second LED light source 62 is connected to a connection point between the switching element Q3 and the capacitor C3 on an anode side, and connected to a connection point between the inductor L2 and the capacitor C3 on a cathode side thereof.

Then, the AC voltage V4 is supplied to the LED group 6 to realize lighting of either one of the first and second light sources 61 and 62 in accordance with a polarity of the AC voltage V4. More specifically, when the switching element Q2 is turned on and the switching element Q3 is turned off, an LED current I1 is made to flow in the first LED light source 61 to allow lighting. Also, when the switching element Q3 is turned on the switching element Q2 is turned off, an LED current I2 is made to flow in the second LED light source 62 to allow lighting.

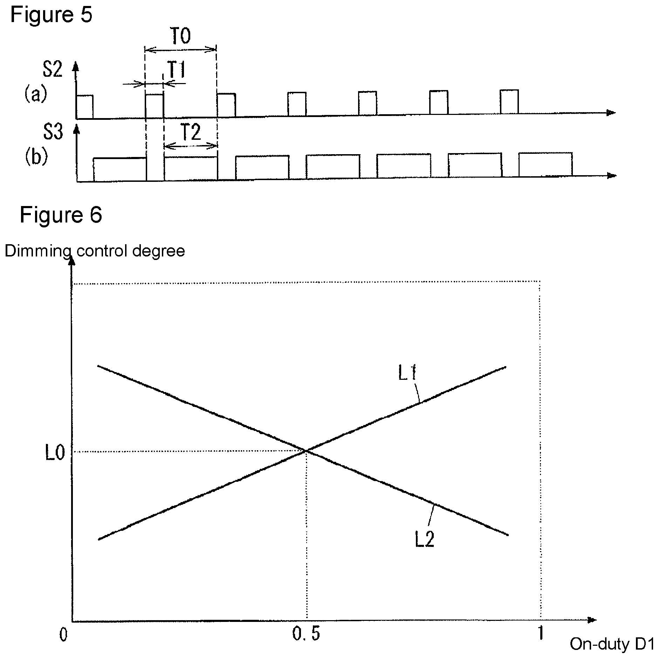

The AC control part 432 according to the present embodiment is also capable of controlling the ratio of a first on-time T1 counted in turning on the switching element Q2 relative to a second on-time T2 counted in turning on the switching element Q3 (i.e. complementary duty control). More specifically, by controlling an upper-limit threshold and a lower-limit threshold as set by the AC control part 432, the first on-time T1 can be made longer than the second on-time T2 as shown in Figs.4(a) and 4(b). Also, by controlling an upper-limit threshold and a lower-limit threshold as set by the AC control part 432, the second on-time T2 can be made longer than the first on-time T1 as shown in Figs.5a and 5b.

Note that, in the present embodiment, the ratio of the first on-time T1 relative to one cycle T0 (= T1 + T2) of a switching frequency f of the switching elements Q2 and Q3 is referred to as an on-duty D1. That is, if the on-duty D1 is 0.5, the first on-time T1 is equal to the second on-time T2 (refer to Figs. 2(a) and 2(b)). Moreover, if the on-duty D1 is more than 0.5, the first on-time T1 is larger than the second on-time T2 (refer to Figs. 4(a) and 4(b)). If the on-duty D1 is less than 0.5, the first on-time T1 is smaller than the second on-time T2 (refer to Figs.5a and 5b). Note that an on-duty D2 which shows the ratio of the second on-time T2 relative to the one cycle T0 of the switching frequency f is expressed by D2 = 1 - D1.

The control part 4 according to the present embodiment also includes a signal input part 44, to which an LED control signal S4 is inputted from the outside. The LED control signal S4 according to the present embodiment has information which shows the ratio of dimming control degrees L1 and L2 applied to the first and second LED light sources 61 and 62 respectively, and the signal input part 44 converts the LED control signal S4 into a format corresponding to the switching control part 43 in order to output to the switching control part 43.

Then, the AC control part 432 can make, based on the LED control signal S4, by causing the ratio of the first on-time T1 and the second on-time T2 or the on-duty D1 to fluctuate, the magnitude of the LED currents I1 and I2 variable. As shown in Fig.6, in accordance with an increase of the on-duty D1, the LED current I1 is made larger to increase the dimming control degree L1 applied to the first LED light source 61, while the LED current I2 is made smaller to decrease the dimming control degree L2 applied to the second LED light source 62. On the contrary, in accordance with a decrease of the on-duty D1, the LED current I1 is made smaller to decrease the dimming control degree L1 applied to the first LED light source 61 and the LED current I2 is made larger to increase the dimming control degree L2 applied to the second LED light source 62. In addition, when the on-duty D1 is equal to 0.5, the dimming control degree L1 of the first LED light source 61 coincides with the dimming control degree L2 of the second LED light source 62 to realize a dimming control degree L0 (= L1 = L2).

As stated above, according to the present embodiment, in such a simple configuration that the on-duties D1 and D2 of the switching elements Q2 and Q3 are subjected to a complementary duty control, different power can be supplied to each of the first and second LED light sources 61 and 62.

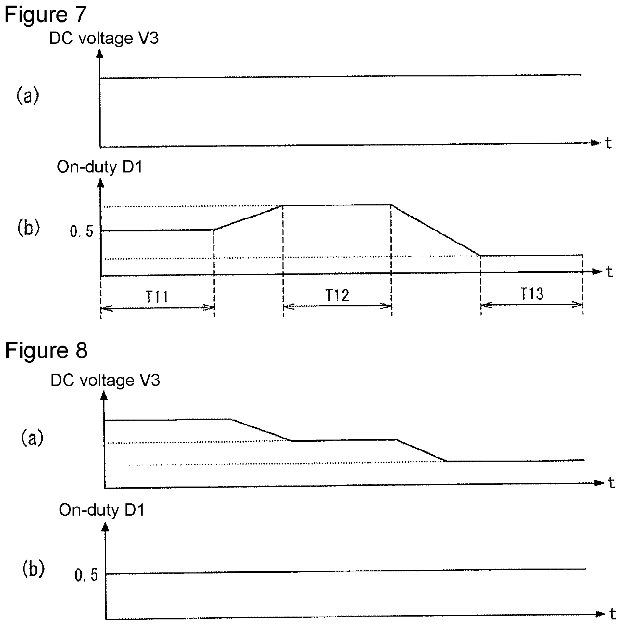

Also, by arranging the first and second LED light sources 61 and 62 so that irradiation directions thereof are disposed to mutually different directions, a ratio of light outputted to different directions can be made variable. As shown in Figs. 7 (a) and 7 (b), while maintaining the DC voltage V3, which serves as a power source inputted to the AC voltage output part 3, in constant, only the on-duty D1 is made variable. In a period T11 in which the on-duty D1 is equal to 0.5, the dimming control degrees L1 and L2 of the first and second LED light sources 61 and 62 coincide to each other, whereby light with the same output is irradiated to different directions. Also, in a period T12 in which the on-duty D1 is increased from a state of the period T11 and made larger than 0.5, the dimming control degree L1 of the first LED light source 61 is larger than the dimming control degree L2 of the second LED light source 62, whereby light with different outputs is irradiated to different directions. Moreover, in a period T13 in which the on-duty D1 is decreased from a state of the period T12 and made smaller than 0.5, the dimming control degree L1 of the first LED light source 61 is smaller than the dimming control degree L2 of the second LED light source 62, whereby light with different outputs is irradiated to different directions.

The LED control signal S4 also has information showing the dimming control degrees L1 and L2 of the first and second LED light sources 61 and 62, so that the DC control part 431 can perform, based on the LED control signal S4, by controlling the DC voltage V3, a dimming control for the first and second LED light sources 61 and 62. Since the DC voltage V3 serves as a power source inputted to the AC voltage output part 3, reduction of the DC voltage V3 is accompanied by reduction of the LED currents I1 and I2 supplied to the first and second LED light sources 61 and 62, whereby resulting in reduction of the dimming control degrees L1 and L2. For example, as shown in Figs. 8 (a) and 8 (b), in a state of maintaining the on-duty D1 which is equal to 0.5, the DC voltage V3 is made variable. In this case, following a change of the DC voltage V3, the dimming control degree L0 (= L1 = L2) of the first and second light sources 61 and 62 will change, which explains why the dimming control degree L0 is reduced as the DC voltage V3 is made smaller. In addition, it is also possible to make, by changing only the DC voltage V3, in a state of maintaining the ratio of the dimming control degrees L1 and L2, only the dimming control degrees L1 and L2 variable.

Moreover, by using the DC control part 431 and the AC control part 432 to control, based on the LED control signal S4, both the DC voltage V3 and the on-duty D1, it is made possible to set the dimming control degrees L1 and L2 to a desired value.

### (Second embodiment)

In the present embodiment, a white-colored high color temperature LED is used for the LED elements 611 which constitute the first LED light source 61, and a white-colored low color temperature LED whose color temperature is lower than that of the LED elements 611 is used for the LED elements 621 which constitute the second LED light source 62. Then, the first LED light source 61 and the second LED light source 62 are provided integrally, and light irradiated by the first and second LED light sources 61 and 62 is combined for irradiation from the LED group 6. Note that same components as those of the first embodiment are referred to by using same reference numerals and explanation thereof will be omitted.

In the present embodiment, the first LED light source 61 and the second LED light source 62 are configured to exhibit mutually different light emitting colors. Accordingly, by the AC control part 432 which controls the on-duty D1, a color control can be carried out for light irradiated from the LED group 6.

The LED control signal S4 according to the present embodiment has information showing a color temperature of the LED group 6, and the signal input part 4 converts color temperature information of the LED control signal S4 into the dimming control degrees L1 and L2 of the first and second light LED light sources 61 and 62 respectively in order to output to the AC control part 432. Then, based on the dimming control degrees L1 and L2 outputted from the signal input part 4 for the first and second LED light sources 61 and 62 respectively, the AC control part 432 controls the on-duties D1 and D2.

For example, if a color temperature of light irradiated from the LED group 6 is made higher, the on-duty D1 is made larger and the dimming control degree L1 of the first LED light source 61 is made higher while reducing the dimming control degree L2 of the second LED light source 62. Since a white-colored high color temperature LED is used for the LED elements 611 which configure the first LED light source 61, a color temperature of light irradiated from the LED group 6 can be made higher.

Similarly, if a color temperature of light irradiated from the LED group 6 is made lower, by making the on-duty D1 smaller, a color temperature of light irradiated from the LED group 6 can be made lower.

Also, similar to the first embodiment, based on the LED control signal S4, the DC control part 431 controls the DC voltage V3, whereby the degree of a dimming control can be controlled for light irradiated from the LED group 6.

Also, as stated above, by configuring the first and second LED light sources 61 and 62 to exhibit mutually different light emitting colors and combining light irradiated by each of the light sources for irradiation from the LED group 6, a color temperature control which is approximate to that for an incandescent lamp can be performed.

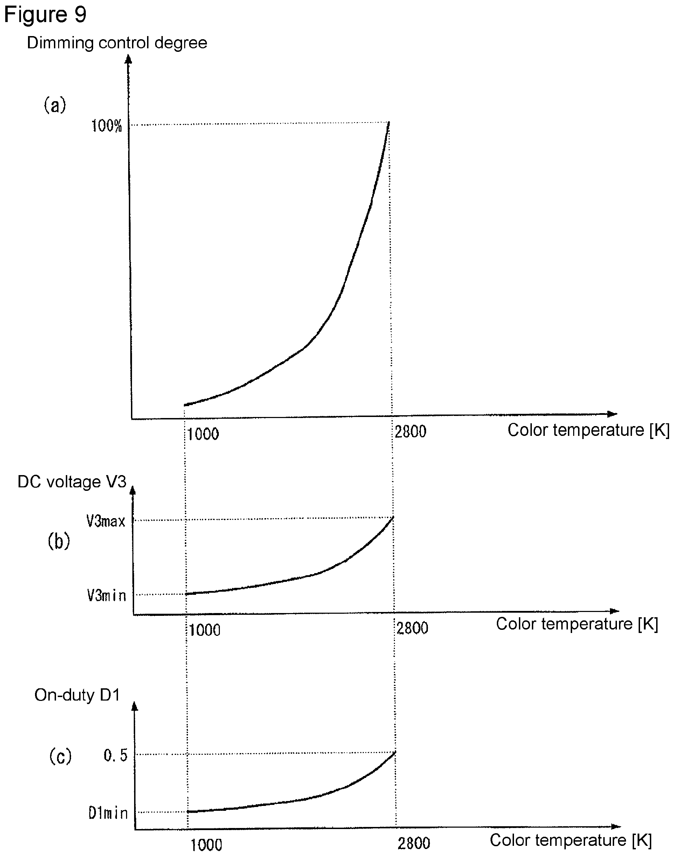

As shown in Fig. 9 (a), incandescent lamps are subjected to a color temperature change in accordance with a change made in the degree of a dimming control. For example, in such a case that a color temperature obtained when an incandescent lamp is subjected to full lighting (or dimming control degree of 100%) is assumed to be 2800K, reduction in the degree of a dimming control is accompanied by reduction of a color temperature, and a color temperature will result in 1000K in a lower limit of a dimming control.

By using an LED lighting circuit according to the present embodiment, with reference to Figs. 9 (b) and 9 (c), a dimming/color control applied to the LED group 6, in which a control to realize characteristics approximate to characteristics of the dimming control degree to the color temperature as shown in the incandescent lamp of Fig. 9 (a) is carried out will be explained below.

In the present embodiment, as shown in Figs. 9 (b) and 9 (c), a color temperature of the LED group 6 will be 2800K when the DC voltage V3 is set to a maximum value V3max and the on-duty D1 is set to 0.5. Also, a color temperature of the LED group 6 will be 1000K when the DC voltage V3 is set to a minimum value V3min and the on-duty D1 is set to a lower-limit setting value D1min. Note that the on-duty D1 corresponding to the DC voltage V3 which is set to the maximum value V3max may also be set to any values other than 0.5.

Then, as shown in Figs. 9 (b) and 9 (c), in accordance with reduction of the DC voltage V3, the on-duty D1 is made smaller and the on-duty D2 is made larger. Since the LED elements 611 which constitute the first LED light source 61 have a higher color temperature than the LED elements 621 which configure the second LED light source 62 in the present embodiment, a color temperature of light irradiated from the LED group 6 is reduced by making the on-duty D1 smaller.

By thus controlling the DC voltage V3 and the on-duty D1 simultaneously, a dimming/color control to realize characteristics approximate to characteristics of the dimming control degree to the color temperature as shown in the incandescent lamp of Fig. 9 (a) can be achieved.

Note that, even though the present embodiment employs a white-colored high color temperature LED for the LED elements 611 and a white-colored low color temperature LED for the LED elements 621, a white-colored LED may be used for the LED elements 611 and a red-colored LED may be used for the LED elements 621.

Regarding a light emitting color (or color temperature) of the LED elements 611 and 621 used for the first and second LED light sources 61 and 62 respectively and values of the on-duties D1 and D2, an optimum temperature and value may be selected depending on a color temperature range to be desirably realized. For example, a relationship of light emitting colors of the LED elements 611 and 621 and the on-duties D1 and D2 may be set as follows.

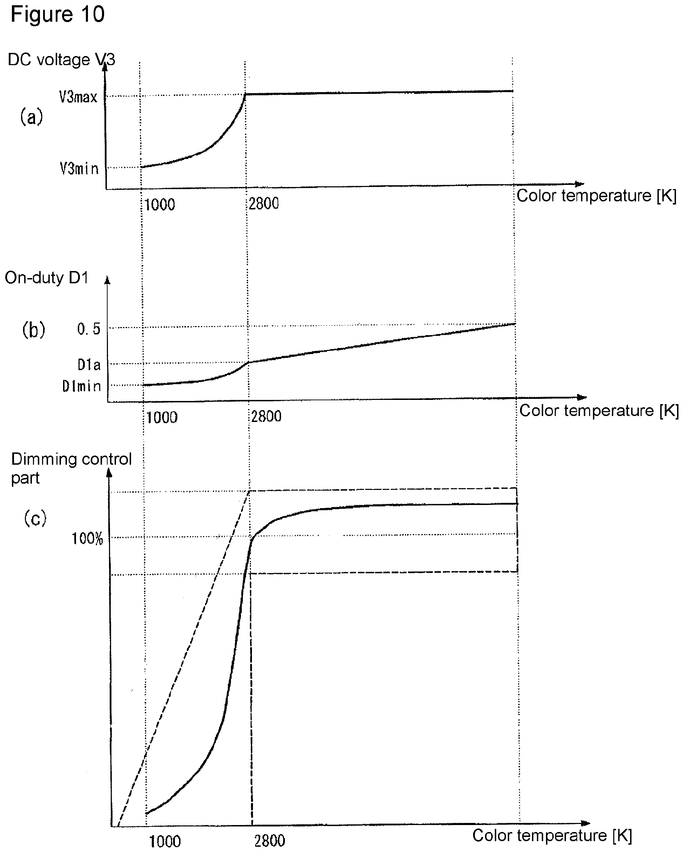

As shown in Figs. 10 (a) and 10 (b), while a color temperature of light irradiated by the LED group 6 is in a range of 1000K to 2800K, the DC voltage V3 and the on-duty D1 are controlled simultaneously as stated above. Note that, herein, the LED elements 611 and 612 are selected so as that a color temperature of the LED group 6 falls in 2800K when the DC voltage V3 is set to the maximum value V3max and the on-duty D1 is set to D1a (< 0.5). Then, at a color temperature which is equal to or more than 2800K, the DC voltage V3 is maintained to V3max and the on-duty D1 is increased from D1a to 0.5.

Accordingly, as shown in Fig. 10 (c), while a color temperature is in a range of 1000 to 2800K, a dimming/color control to realize characteristics approximate to characteristics of the dimming control degree to the color temperature as shown in the incandescent lamp of Fig. 9 (a) can be achieved. Furthermore, at a color temperature which is equal to or more than 2800K, while the degree of a dimming control applied to light irradiated by the LED group 6 is maintained in substantially constant, a color control can be carried out so that a color temperature reaches 2800K or more. That is, by using only one LED group 6, it is possible to achieve both controls including a dimming/color control to realize characteristics approximate to characteristics of the dimming control degree to the color temperature as shown in incandescent lamps, and a color control to change only a the color temperature.

### (Third embodiment)

In an LED lighting circuit according to the present embodiment, the DC control part 431 maintains the DC voltage V3 in constant, while the AC control part 432 carries out a dimming control and a color control for the LED group 6. Note that the first and second LED light sources 61 and 62 in the present embodiment are configured to exhibit mutually different light emitting colors. Same configurations as those of the first embodiment are referred to by using same reference numerals and explanation thereof will be omitted.

The AC control part 432 in the present embodiment carries out, similar to the second embodiment, based on a color temperature shown by the LED control signal S4, by making the on-duty D1 variable, a color control for a color temperature of light irradiated from the LED group 6.

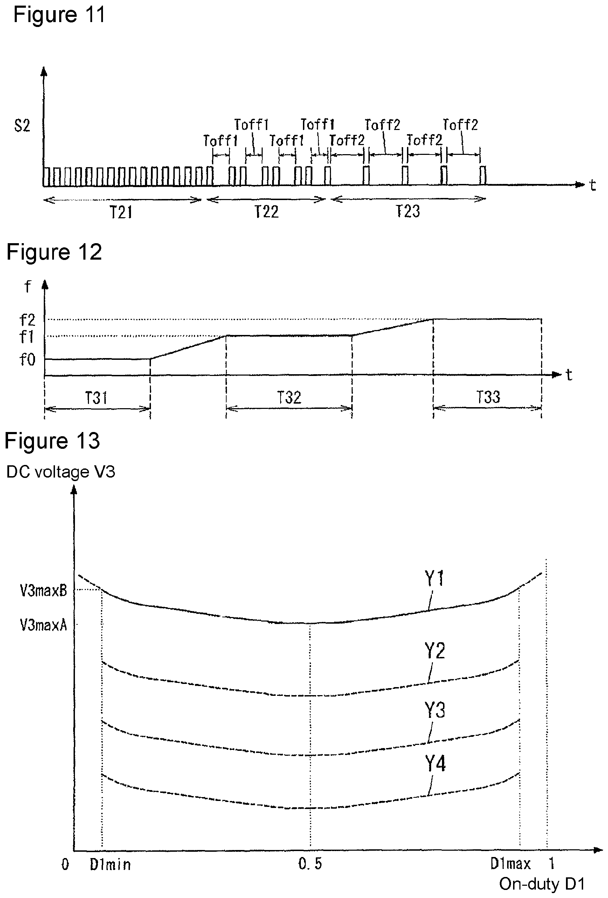

By using Fig.11, a color control according to the present embodiment will be explained next.

The AC control part 432 establishes an off-period Toff to turn off both the switching elements Q2 and Q3 in every predetermined cycle, and controls the off-period Toff based on the degree of a dimming control shown by the LED control signal S4 (i.e. burst control). The AC control part 432 sets the off-period Toff longer as the degree of a dimming control becomes lower.

As shown in Fig.11, in a period T21 in which the LED group 6 is subjected to full lighting (or dimming control degree of 100%), the AC control part 432 sets the off-period Toff to 0 and repeats turning on/off the switching elements Q2 and Q3 alternately.

Then, in a period T22 in which the LED group 6 is subjected to a dimming control degree of 66%, the AC control part 432 establishes an off-period Toff1 in every predetermined cycle. During the off-period Toff1, the output level of both the control signals S2 and S3 is brought into a low level and the switching elements Q2 and Q3 are both turned off. Accordingly, during the off-period Toff1, the LED current I1 and I2 are not made to flow in the first and second LED light sources 61 and 62, whereby an average value of the LED currents I1 and I2 decreases to reduce the degree of a dimming control for the LED group 6.

Also, in a period T23 in which the LED group 6 is subjected to a dimming control degree of 33%, the AC control part 432 establishes an off-period Toff2, which is longer than the off-period Toff1, in every predetermined cycle. Accordingly, average values of the LED currents I1 and I2 further decreases with further reduction of the degree of a dimming control for the LED group 6.

As stated above, in the present embodiment, according to the degree of a dimming control, the AC control part 432 establishes the off-period Toff to turn off both the switching elements Q2 and Q3 and controls an average value of the LED currents I1 and I2, whereby enabling a dimming control for the LED group 6.

Since a dimming/color control can be realized only by the AC control part 432, it is also possible to further simplify the circuit configuration.

### (Fourth embodiment)

In an LED lighting circuit according to the present embodiment, the DC control part 431 maintains the DC voltage V3 in constant, while the AC control part 432 carries out a dimming control and a color control for the LED group 6. Note that the first and second LED light sources 61 and 62 in the present embodiment are configured to exhibit mutually different light emitting colors. Same configurations as those of the first embodiment are referred to by using same reference numerals and explanation thereof will be omitted.

The AC control part 432 according to the present embodiment carries out, similar to the second embodiment, based on a color temperature shown by the LED control signal S4, by making the on-duty D1 variable, a color control for a color temperature of light irradiated from the LED group 6.

By using Fig.12, a dimming control according to the present embodiment will be explained next.

The AC control part 432 controls, based on the degree of a dimming control shown by the LED control signal S4, the switching frequency f (= 1/T0) of the switching elements Q2 and Q3. The AC control part 432 sets the switching frequency f higher as the degree of a dimming control becomes lower.

As shown in Fig.12, in a period T31 in which the LED group 6 is subjected to full lighting (or dimming control degree of 100%), the AC control part 432 sets the switching frequency to f0.

Then, in a period T32 in which the LED group 6 is subjected to a dimming control degree of X1% which is lower than 100%, the AC control part 432 sets the switching frequency to f1 which is higher than f0. Also, in a period T33 in which the LED group 6 is subjected to a dimming control degree of X2% which is lower than X1%, the AC control part 432 sets the switching frequency to f2 which is higher than f1. Note that the degree of a dimming control becomes lower in the order from 100% to X1% to X2%.

In other words, the AC control part 432 sets the switching frequency f of the switching elements Q2 and Q3 higher as the degree of a dimming control shown by the LED control signal S4 becomes lower. That is, by setting the switching frequency f higher to approach a resonance frequency, impedance in the AC voltage output part 3 is increased to reduce the LED currents I1 and I2 supplied the LED group 6, whereby a dimming control can be applied to the LED group 6.

Since a dimming/color control can be realized only by the AC control part 432, it is also possible to further simplify the circuit configuration.

### (Fifth embodiment)

In an LED lighting circuit according to the present embodiment, when a color control is performed for the LED group 6 by making the on-duty D1 variable, by changing only a color temperature of the LED group 6, the degree of a dimming control can be controlled to a constant state. Note that the first and second LED light sources 61 and 62 in the present embodiment are configured to exhibit mutually different light emitting colors. Same configurations as those of the first embodiment are referred to by using same reference numerals and explanation thereof will be omitted.

Similar to the second embodiment, in the LED lighting circuit according to the present embodiment, the DC control part 431 controls the DC voltage V3 to realize a dimming control for the LED group 6, and the AC control part 432 controls the on-duty D1 to realize a color control for the LED group 6.

However, in such a state that the DC control part 431 maintains the DC voltage V3 in constant, if the AC control part 432 performs a color control for the LED group 6 by making the on-duty D1 variable, the degree of a dimming control applied to the LED group 6 also changes. As opposed to the degree of a dimming control applied to the LED group 6 when the DC voltage V3 is in a constant state with the on-duty D1 equal to 0.5, the degree of a dimming control applied to the LED group 6 becomes lower as the on-duty D1 is increased/decreased from 0.5.

Therefore, in the LED lighting circuit according to the present embodiment, when a color control is carried out, by making the DC voltage V3 larger as the on-duty D1 is increased/decreased from 0.5, a correction is made for the degree of a dimming control applied to the LED group 6.

For example, as shown in a solid line Y1 of Fig.13, by setting the DC voltage V3 to V3maxA and the on-duty D1 to 0.5, the LED group 6 is subjected to full lighting (or dimming control degree of 100%). Then, in order to allow a color control for the LED group 6 by the AC control part 432, a correction is made by the DC control part 341 so that, as an increase of the on-duty D1 from 0.5 becomes larger, the DC voltage V3 is made larger from V3maxA. Also, in order to allow a color control for the LED group 6 by the AC control part 432, a correction is made by the DC control part 341so that as a decrease of the on-duty D1 from 0.5 becomes larger, the DC voltage V3 is made larger from V3maxA.

That is, by increasing the DC voltage V3 to compensate for a decreasing change of the degree of a dimming control as the on-duty D1 is apart from 0.5, in a state of maintaining a dimming control degree of 100% for the LED group 6, only a color temperature can be changed. Note that, in this case, the DC voltage V3 obtained when the on-duty D1 is set to an upper-limit value D1max and a lower-limit value D1min becomes V3maxB, and a correction value from V3maxA will be at maximum.

Also, even if the DC control part 431 carries out, based on the LED control signal S4, a dimming control by making the DC voltage V3 smaller, similar to the above cases, as shown in broken lines Y2 to Y4 of Fig.13, a correction is made so that the DC voltage V3 is made larger as the on-duty D1 is apart from 0.5.

In other words, by making the DC voltage V3 larger as the difference of time between the on-time T1 of the switching element Q2 and the on-time T2 of the switching element Q3 becomes larger, in a state of maintaining the degree of a dimming control for the LED group 6, only a color temperature can be changed.

### [Description of Reference Numerals]

- 1: Diode bridge
- 2: DC voltage output part
- 3: AC voltage output part
- 4: Control part
- 5: AC power source
- 6: LED group
- 41: Driver circuit
- 42: Driver circuit
- 43: Switching control part
- 44: Signal input part
- 61, 62: First and second LED light sources
- 431: DC control part
- 432: AC control part
- Q1, Q2: Switching elements (first and second switching elements)

## Claims

1. An LED lighting circuit comprising:
a DC control part (431), adapted to control a DC voltage output part (2) for outputting a DC voltage (V3);
an AC voltage output part (3), having serially connected first and second switching elements (Q1, Q2), adapted to convert the DC voltage into an AC voltage (V4) by turning on/off the first and second switching elements (Q1, Q2) in order to output the AC voltage (V4) to an LED group (6) including first and second LED light sources (61, 62) being connected in reverse parallel to each other;
an AC control part (432) for carrying out a switching control to repeat turning on/off the first and second switching elements (Q2, Q3) alternately and controlling, by turning off the second switching element (Q3) upon turning on the first switching element (Q2) and turning off the first switching element (Q2) upon turning on the second switching element (Q3), a first ratio (D1) of a first on-time (T1) counted in turning on the first switching element (Q2) relative to a second on-time (T2) counted in turning on the second switching element (Q3), **characterized in that**
a signal input part (44) is provided, which is configured to receive an LED control signal (S4) which is inputted from the outside, the LED control signal (S4) comprises information indicating a second ratio of dimming control degrees (L1, L2) applied to the first and second LED light sources (61, 62) respectively,
the DC control part (431) and the AC control part (432) are adapted to control, based on the LED control signal (S4), the DC voltage (V3) and to control the first ratio (D1) based on said information indicating the second ratio of said dimming control degrees.

2. The LED lighting circuit according to claim 1, wherein the first LED light source (61) and the second LED light source (62)exhibit mutually different light emitting colors.

3. The LED lighting circuit according to claim 1 or 2, wherein:
the DC voltage output part (2) is configured to output the DC voltage variably; and
a DC control part (431) is provided to make the DC voltage larger in accordance with an increase in the degree of a dimming control applied to the first and second LED light sources (61, 62).

4. The LED lighting circuit according to claim 3, wherein the DC control part (431) makes the DC voltage larger in accordance with an increase in the difference of time between the first on-time (T1) and the second on-time (T2).

5. The LED lighting circuit according to any one of claims 1 to 4,
wherein the AC control part (432) establishes an off-time to turn off both the first and second switching elements (Q2, Q3) by stopping a switching control applied to the first and second switching element (Q2, Q3), and makes the off-time longer in accordance with a decrease in the degree of a dimming control applied to the first and second LED light sources (61, 62).

6. The LED lighting circuit according to any one of claims 1 to 5,
wherein the AC control part (432) controls, in accordance with the degree of a dimming control applied to the first and second LED light sources (61, 62), a switching frequency of the first and second switching elements (Q2, Q3).

## Patentansprüche

1. LED-Beleuchtungsschaltkreis aufweisend:
einen Gleichspannungssteuerteil (431), der dazu eingerichtet ist, einen Gleichspannungsausgabeteil (2) zum Ausgeben einer Gleichspannung (V3) zu steuern;
einen Wechselspannungsausgabeteil (3), mit einem ersten und einem zweiten Schaltelement (Q1, Q2), die in Reihe geschaltet sind, die dazu eingerichtet sind, die Gleichspannung in eine Wechselspannung (V4) umzuwandeln durch das Ein-/ Ausschalten des ersten und zweiten Schaltelements (Q1, Q2), um die Wechselspannung (V4) an eine LED-Gruppe (6) abzugeben, die eine erste und eine zweite LED-Lichtquelle (61, 62) aufweist, die antiparallel zueinander geschaltet sind;
einen Wechselspannungssteuerteil (432) zur Durchführung einer Schaltsteuerung, um das wiederholte abwechselnde Ein-/ Ausschalten des ersten und zweiten Schaltelements (Q2, Q3) auszuführen und durch das Ausschalten des zweiten Schaltelements (Q3) beim Einschalten des ersten Schaltelements (Q2) und durch das Ausschalten des ersten Schaltelements (Q2) beim Einschalten des zweiten Schaltelements (Q3) ein erstes Verhältnis (D1) einer ersten Einschaltzeit (T1), die während des Einschaltens des ersten Schaltelements (Q2) gemessen wird, gegenüber einer zweiten Einschaltzeit (T2), die beim Einschalten des zweiten Schaltelements (Q3) gemessen wird, zu steuern, **dadurch gekennzeichnet,**
**dass** ein Signaleingabeteil (44) bereitgestellt ist, der dazu eingerichtet ist, ein LED-Steuersignal (S4) zu empfangen, das von außerhalb eingegeben wird, wobei das LED-Steuersignal (S4) Informationen enthält, die ein zweites Verhältnis von Dimmsteuergraden (L1, L2) enthalten, die jeweils auf die erste und die zweite LED-Lichtquelle (61, 62) angewandt werden,
wobei der Gleichspannungssteuerteil (431) und der Wechselspannungssteuerteil (432) dazu eingerichtet sind, die Gleichspannung (V3) basierend auf dem LED-Steuersignal (S4) zu steuern, und das erste Verhältnis (T1) basierend auf den Informationen zu steuern, die das zweite Verhältnis der Dimmsteuergrade angeben.

2. LED-Beleuchtungsschaltkreis nach Anspruch 1, wobei die erste LED-Lichtquelle (61) und die zweite LED-Lichtquelle (62) einander gegenüber unterschiedliche Lichtemissionsfarben aufweisen.

3. LED-Beleuchtungsschaltkreis nach Anspruch 1 oder 2, wobei:
der Gleichspannungsausgabeteil (2) dazu eingerichtet ist, die Gleichspannung variabel auszugeben; und
ein Gleichspannungssteuerteil (431) bereitgestellt ist, um die Gleichspannung in Übereinstimmung mit einem Anstieg in dem Grad einer Dimmsteuerung zu erhöhen, die auf die erste und die zweite LED-Lichtquelle (61, 62) angewandt wird.

4. LED-Beleuchtungsschaltkreis nach Anspruch 3, wobei der Gleichspannungssteuerteil (431) die Gleichspannung in Übereinstimmung mit einem Anstieg in einer Zeitdifferenz zwischen der ersten Einschaltzeit (T1) und der zweiten Einschaltzeit (T2) erhöht.

5. LED-Beleuchtungsschaltkreis nach irgendeinem der Ansprüche 1-4, wobei der Wechselspannungssteuerteil (432) eine Ausschaltzeit etabliert, um sowohl das erste, als auch das zweite Schaltelement (Q2, Q3) auszuschalten durch das Stoppen einer Schaltsteuerung, die auf das erste und zweite Schaltelement (Q2, Q3) angewandt wird, und der die Ausschaltzeit in Übereinstimmung mit einer Verringerung in dem Grad einer Dimmsteuerung verlängert, die auf die erste und zweite LED-Lichtquelle (61, 62) angewandt wird.

6. LED-Beleuchtungsschaltkreis nach irgendeinem der Ansprüche 1-5, wobei der Wechselspannungssteuerteil (432) eine Schaltfrequenz des ersten und zweiten Schaltelements (Q2, Q3) in Übereinstimmung mit dem Grad einer Dimmsteuerung steuert, die auf die erste LED-Lichtquelle (61, 62) angewandt wird.

## Revendications

1. Circuit d'éclairage à DEL, comprenant :
une partie formant commande CC (431), adaptée pour commander une partie formant sortie en tension CC (2), destinée à produire une tension CC (V3) ;
une partie formant sortie en tension CA (3), ayant des premier et second éléments de commutation reliés en série (Q1, Q2), adaptés pour convertir la tension CC en une tension CA (V4) en ouvrant / fermant les premier et second éléments de commutation (Q1, Q2), afin de délivrer la tension CA (V4) à un groupe de DEL (6), comportant des première et seconde sources lumineuses à DEL (61, 62), reliées en parallèle inverse entre elles ;
une partie formant commande CA (432), destinée à exécuter une commande de commutation, pour répéter l'ouverture / la fermeture des premier et second éléments de commutation (Q2, Q3) alternativement et à commander, en fermant le second élément de commutation (Q3) dès l'ouverture du premier élément de commutation (Q2) et en fermant le premier élément de commutation (Q2) dès l'ouverture du second élément de commutation (Q3), un premier rapport (D1) d'un premier temps d'ouverture (T1), compté en ouvrant le premier élément de commutation (Q2) par rapport à un second temps d'ouverture (T2), compté en ouvrant le second élément de commutation (Q3),
**caractérisé en ce**
**qu'**une partie formant entrée de signal (44) est prévue, qui est configurée pour recevoir un signal de commande à DEL (S4), qui est entré depuis l'extérieur, le signal de commande à DEL (S4) comprend des informations, indiquant un second rapport de degrés de commande de l'intensité lumineuse (L1, L2), appliqué aux première et seconde sources lumineuses à DEL (61, 62), respectivement,
la partie formant commande CC (431) et la partie formant commande CA (432) sont adaptées pour commander, en fonction du signal de commande à DEL (S4), la tension CC (V3) et pour commander le premier rapport (D1), en fonction desdites informations, indiquant le second rapport desdits degrés de commande de l'intensité lumineuse.

2. Circuit d'éclairage à DEL selon la revendication 1, dans lequel la première source lumineuse à DEL (61) et la seconde source lumineuse à DEL (62) présentent des couleurs émettant des lumières mutuellement différentes.

3. Circuit d'éclairage à DEL selon la revendication 1 ou 2, dans lequel :
la partie formant sortie en tension CC (2) est configurée pour délivrer la tension CC de manière variable et
une partie formant commande CC (431) est prévue pour rendre la tension CC supérieure, conformément à une augmentation du degré de commande de l'intensité lumineuse, appliqué aux première et seconde sources lumineuses à DEL (61, 62).

4. Circuit d'éclairage à DEL selon la revendication 3, dans lequel la partie formant commande CC (431) rend la tension CC supérieure, conformément à une augmentation de la différence de temps entre le premier temps d'ouverture (T1) et le second temps d'ouverture (T2).

5. Circuit d'éclairage à DEL selon l'une quelconque des revendications 1 à 4, dans lequel la partie formant commande CA (432) établit un temps de fermeture pour fermer les premier et second éléments de commutation (Q2, Q3), en arrêtant une commande de commutation, appliquée aux premier et second éléments de commutation (Q2, Q3) et rend le temps de fermeture plus long, conformément à une diminution du degré de commande de l'intensité lumineuse, appliqué aux première et seconde sources lumineuses à DEL (61, 62).

6. Circuit d'éclairage à DEL selon l'une quelconque des revendications 1 à 5, dans lequel la partie formant commande CA (432) commande, conformément au degré de commande de l'intensité lumineuse, appliqué aux première et seconde sources lumineuses à DEL (61, 62), une fréquence de commutation des premier et second éléments de commutation (Q2, Q3).
